# EUROPEAN PATENT APPLICATION

(11) **EP 3 021 454 A1**
(43) Date of publication of application: **18.05.2016**
(21) Application number: 15000840.7
(22) Date of filing: 21.03.2015
(51) Int. Cl.: H02J 7/32, H02K 53/00

(54) **Textile charger for mobile electronic devices**

(30) Priority: 12.11.2014 PL 41010214
(71) Applicant: Politechnika Lódzka, 90-924 Lódz (PL)
(72) Inventor: Grabowska, Katarzyna, 93-313 ?ód? (PL); Markiewicz, Micha?, 20-314 Lublin (PL)
(74) Representative: Kaczur-Kaczynska, Ewa

(57) **Abstract**

Textile charger for mobile electronic devices contains thread (1) for electromagnetic induction, woven into the fabric or cloth of the article of clothing worn by the user of the electronic device (4) located opposite permanent magnet (2) in another article of their clothing, and which is moving in relation to the thread (1) for electromagnetic induction. Thread (1) is linked via cables to an electrical transducer (3), which in turn connects via a cable to the electronic device (4).

The charger is light and it comprises an integral part of user's clothing. It replaces heavy, sometimes bulky, batteries, which often contain toxic substances. It is shock resistant and weatherproof.

## Description

This invention relates to a textile charger for mobile electronic devices, such as cell phone, smartphone or tablet.

Constantly growing popularity and availability of mobile devices, such as cell phones, smartphones, tablets, and multimedia translates into increased demand for continuous ac cess to portable sources of energy. Currently available classical accumulators and batteries are characterized by limited capacity and short lifetime. Additionally, they are characterized by considerable weight and bulkiness. Manufacturers tend to apply energy saving functions - e.g. selectively turning off electronic modules not in constant use, such as GPS or Bluetooth module.

Patent application PL 404904 describes a hybrid thread for electromagnetic induction, designed in particular to manufacture textile articles capable of shielding from electromagnetic radiation, containing tensed core thread of ferromagnetic material and a conducting thread wound round it, which along the whole length of the core thread forms a solenoid with its coils tightly clinging to the core thread while at the same time clinging to each other, overlapping or spaced from each other at a distance corresponding to a single pitch of the solenoid's helix. Both ends of the entwining thread are shorted or grounded. The core thread is made of ferromagnetic material characterized by high magnetic moment, and the entwining thread is encased in dielectric material.

**According to the invention,** the textile charger for mobile electronic devices contains thread for electromagnetic induction, woven using any weaving or knitting technique into the fabric or cloth of an article of clothing worn by the user of the electronic device and located opposite the permanent magnet in another article of their clothing and performing shuttle movement in relation to the thread for electromagnetic induction. Both ends of the thread for electromagnetic induction are linked via a cable to an electrical transducer, which in turn is connected via a cable to the powered electronic device.

Electrical transducer converts electrical current, inducted in the thread for electromagnetic induction as a result of the magnet's movement in relation to the thread, to a form conforming to the requirements of the electronic device.

According to the invention, the charger is inseparable from the garment's fabric or cloth. It is continuously producing electrical energy recharging mobile electronic device, such as cell phone, smartphone, tablet, and multimedia. The charger is light and it comprises an integral part of user's clothing. It replaces heavy, sometimes bulky, batteries, which often contain toxic substances. It is shock resistant and weatherproof.

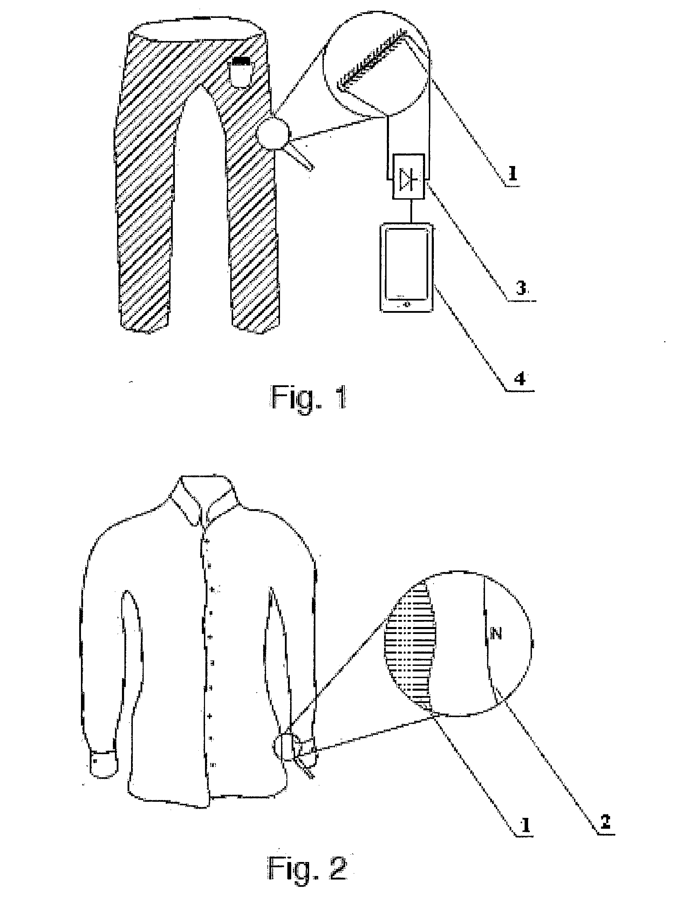

An embodiment of the subject of the invention is presented in the drawings below, in which Fig. 1 shows the schematic representation of the charger, while Fig. 2 illustrates the localization of the charger's magnet on user's clothing.

The charger contains the thread 1 for electromagnetic induction, woven during the process of weaving into the fabric of the user's pants. Thread 1 contains tensed core thread of ferromagnetic material with high magnetic moment and a conducting thread wound round it, which along the whole length of the core thread forms a solenoid with its coils tightly clinging to the core thread while at the same time clinging to each other, overlapping or spaced from each other at a distance corresponding to a single pitch of the solenoid's helix. The entwining thread is encased in dielectric material. Thread 1 is located in pants at the height of shirt's cuff which contains cuff-link with magnet 2. Thread 1 is connected via cables to an electrical current transducer 3, which in turn is connected via a cable to the mobile electronic device 4.

The hand is clothed in a long-sleeved, cuffed shirt with a cuff-link containing magnet 2 and its movement in relation to thread 1 for electromagnetic induction in pants is the source of alternating electromagnetic field. Alternating electromagnetic field induces alternating electrical current in thread 1, which is then transferred to transducer 3, responsible for transforming electrical current into a form conforming to the requirements of the electronic device 4.

## Claims

1. The textile charger for mobile electronic devices is **characterized in that** it contains the thread (1) for electromagnetic induction, woven using any weaving or knitting technique into the fabric or cloth of an article of clothing worn by the user of the electronic device (4), and located opposite the permanent magnet (2) in another article of their clothing, and which is performing shuttle movement in relation to the thread (1) for electromagnetic induction, wherein the thread (1) is linked via cables to an electrical transducer (3), which in turn is connected via a cable to the powered electronic device (4).

## Amended claims

### Amended claims in accordance with Rule 137(2) EPC.

1. The textile charger for mobile electronic devices, containing an electromagnetic induction element provided within a piece of clothing, close to the permanent magnet also placed within this piece, in its parts moving in a pendulum way against the electromagnetic induction element, which is wired to a current converter connected via a cable to a powered electronic device, **characterised in that** as part of the electromagnetic induction contains an electromagnetic induction thread (1) located by unrestricted weaving or knitting method in a woven or knitted fabric, which is a part of the electronic device user's clothing (4), wherein the thread (1) and the permanent magnet (2) are arranged in different parts of the user's clothing (4).
